**Europäisches Patentamt**

(19) **European Patent Office**

**Office européen des brevets**

(11) Publication number: **0 348 069 B1**

(12) # EUROPEAN PATENT SPECIFICATION

(45) Date of publication of patent specification :
09.09.92 Bulletin 92/37

(51) Int. Cl.⁵ : **B60J 7/057**

(21) Application number : **89305761.2**

(22) Date of filing : **07.06.89**

(54) Opening roof for motor vehicle.

(30) Priority : **21.06.88 GB 8814682**

(43) Date of publication of application :
**27.12.89 Bulletin 89/52**

(45) Publication of the grant of the patent :
**09.09.92 Bulletin 92/37**

(84) Designated Contracting States :
**BE DE ES FR GB IT**

(56) References cited :
**DE-A- 3 138 114**
**DE-C- 809 020**
**FR-A- 2 297 151**

(73) Proprietor : **Britax Weathershields Limited**
**180 Sherlock Street**
**Birmingham B5 7EH (GB)**

(72) Inventor : **Cunningham, Douglas James**
**42 Viking Way**
**Horndean Portsmouth Hampshire (GB)**
Inventor : **Assinder, Andrew John**
**47 Crossbush Road**
**Summerley Bognor Regis West Sussex (GB)**

(74) Representative : **Hollinghurst, Antony**
**Britax Limited Patent Department**
**Chichester West Sussex PO19 2AQ (GB)**

## Description

This invention relates to an opening roof for a motor vehicle of the type comprising a panel mounted on guide tracks which are secured to the vehicle roof so as to extend along opposite sides of an opening therein, the panel being moveable along the guide tracks between a closed position in alignment with the opening and an open position in which it substantially overlaps the vehicle roof adjacent to the opening, a transverse member extending between the guide tracks at a location clear of the opening, and a pair of mutually parallel guide channels is formed in the transverse member in the same horizontal plane for receiving first and second flexible cables respectively, the first cable being connected to the panel on one side of the opening and the second cable being connected to the panel on the other side of the opening, and drive means on the transverse member engaging with the cables so as to cause simultaneous movement thereof in opposite directions. An opening roof of this type is disclosed in DE-A-3138114.

According to the invention, in one aspect, in an opening roof of the foregoing type, a pair of mutually parallel guide channels is formed in each guide track in alignment with the guide channels in the transverse member so as to form two continuous guide paths for first and second flexible cables respectively.

Location of the two cables in the same horizontal plane has the advantage of reducing the overall thickness of the assembly. DE-A-3138114 discloses an opening roof of the foregoing type, with two flexible cables in the same horizontal plane accommodated in respective mutually parallel guide channels formed in a transverse member extending between the guide tracks at a location clear of the opening. However only one guide channel is formed in each guide track, with the result that the guide cables can overlap one another only in the transverse member and the range of movement of the panel is limited to less than half the width thereof. Provision of two guide channels in each guide track avoids this disadvantage.

Preferably, the panel is supported on guide shoes which engage with the tracks between the two cables.

The drive means may include a pinion located between the two drive cables and arranged to engage with the first cable at a location spaced 180° from its point of engagement with the second cable.

In one form of the invention, a seal at least partially surrounds the opening and engages with one of the horizontal surfaces of the panel when the panel is in its closed position, the panel being supported on each guide track by a respective support assembly comprising a first support element in the form of a flange secured the panel so as to project downwardly and a second support element forming a guide shoe adapted to slide in the track and projecting upwardly adjacent to the first support element, one of the support elements carrying a laterally extending peg arranged to engage in an elongate slot in the other support element, the slot having two oppositely inclined regions so arranged that, when the peg is at a central location between the inclined regions, the panel is in engagement with the seal and movement of the peg along either of the inclined regions causes at least partial disengagement of the panel from the seal.

Preferably, spring means are arranged to bias the peg into said central location.

The effect of this is that, when a driving force is applied to the guide shoe, it first displaces each peg along its slot against the action of the resilient means. This reduces the force pressing the panel down onto the seal until such time as the force exerted by the resilient means exceeds the friction between the panel and the seal whereupon the panel starts to move. When the force tending to move the panel ceases, the resilient means biases each peg back towards its central position, thus pressing the panel back into engagement with the seals.

Preferably each slot has end regions, each of which slopes in the opposite direction to the adjacent inclined region. Consequently, when the panel reaches either end of its range of travel, continued movement of the guide shoes forces the panel firmly into engagement with the seal.

An embodiment of the invention will now be described, by way of example, with reference to the accompanying drawings in which:

Figure 1 is a perspective view of the upper part of a motor car body fitted with an opening roof assembly in accordance with the invention, having a rear sliding panel and a front tilting panel;

Figure 2 is a plan view of the opening roof assembly shown in Figure 1, the front and side edges of the panels being shown broken away so as to illustrate the underlying mechanism;

Figures 3a and 3b together form a cross-sectional view taken on the line 3 - 3 in Figure 2, with the front panel open and the rear panel in its closed position, the left hand end of figure 3b overlapping the right hand end of figure 3a;

Figure 4 is a cross-sectional view taken on the line 4 - 4 in Figure 3;

Figure 5 is a cross-sectional view, similar to Figure 3b but showing the rear panel stationary in its closed position;

Figure 6 is a cross-sectional View, similar to Figure 3b but showing the rear panel about to commence opening movement;

Figure 7 is a cross-sectional view similar to Figure 3b but showing the rear panel about to reach its fully opened position.

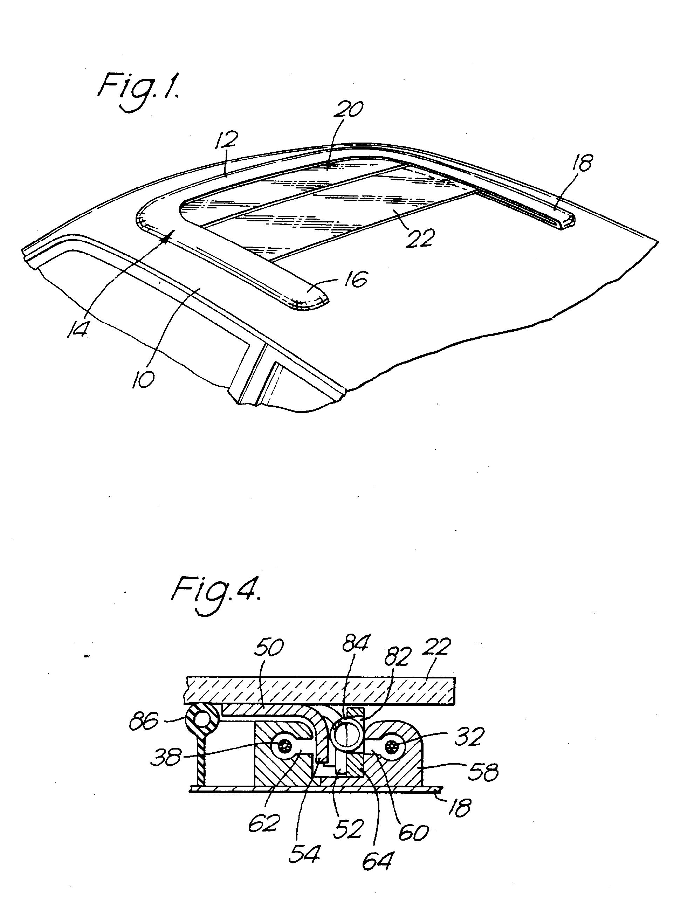

Referring first to Figure 1, the roof 10 of a motor vehicle has an opening therein bounded along its front edge by a front member 12 of a frame 14 which also includes two side members 16 and 18 extending along respective sides of and behind the opening. A first rigid panel 20 is hinged on the front Member 12 so as to pivot between a closed position in which it covers the front part of the opening and an open position in which its rear edge is raised relative to its closed position. A second rigid panel 22 is mounted in tracks formed in the side members 16 and 18 so as to slidable between a forward position in which its front edge abuts against the rear edge of the first panel 20 (when the latter is in its closed position as illustrated) and a rear position in which its front edge projects only slightly in front of the rear edge of the opening.

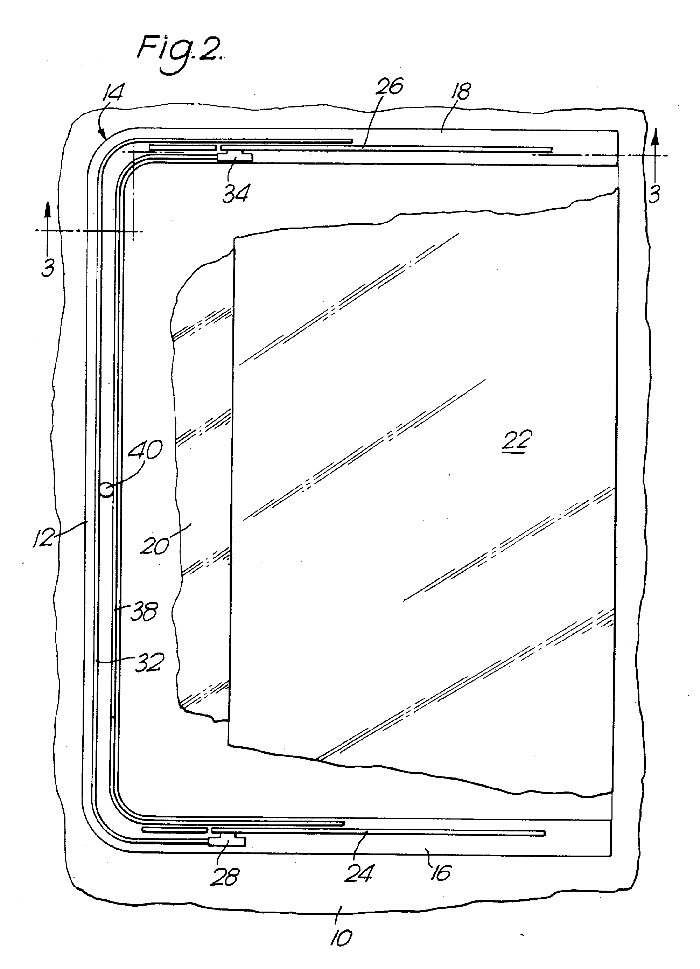

Referring to Figure 2, the rear panel 22 is supported on a first slide assembly 24, which engages in a track in the side member 16, and a corresponding support assembly 26 which engages in a track in the opposite side member 18. The first support assembly 16 is coupled by a drive link 28 to a first drive cable 32 while the support assembly 18 is coupled by a drive link 34 to a second drive cable 38. The first drive cable 32 passes outside the support assemblies 24 and 26 while the second drive cable 38 passes inside the support assemblies 24 and 26. Consequently both the drive cables 32 and 38 can be located in the same horizontal plane.

The drive cables 32 and 38 are engaged by a pinion 40 mounted on the front member 12 of the frame. The pinion 40 can be driven either by hand crank or by an electric motor (not shown). Rotation thereof in the clockwise direction, as viewed in Figure 2, causes the panel 22 to move forwardly while rotation in the counter-clockwise direction causes the panel 22 to move rearwardly.

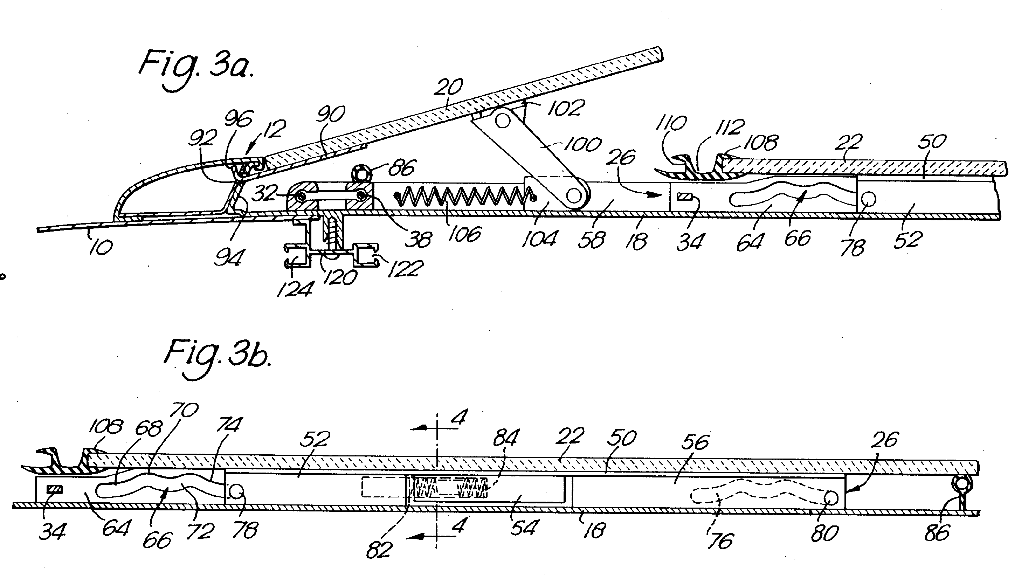

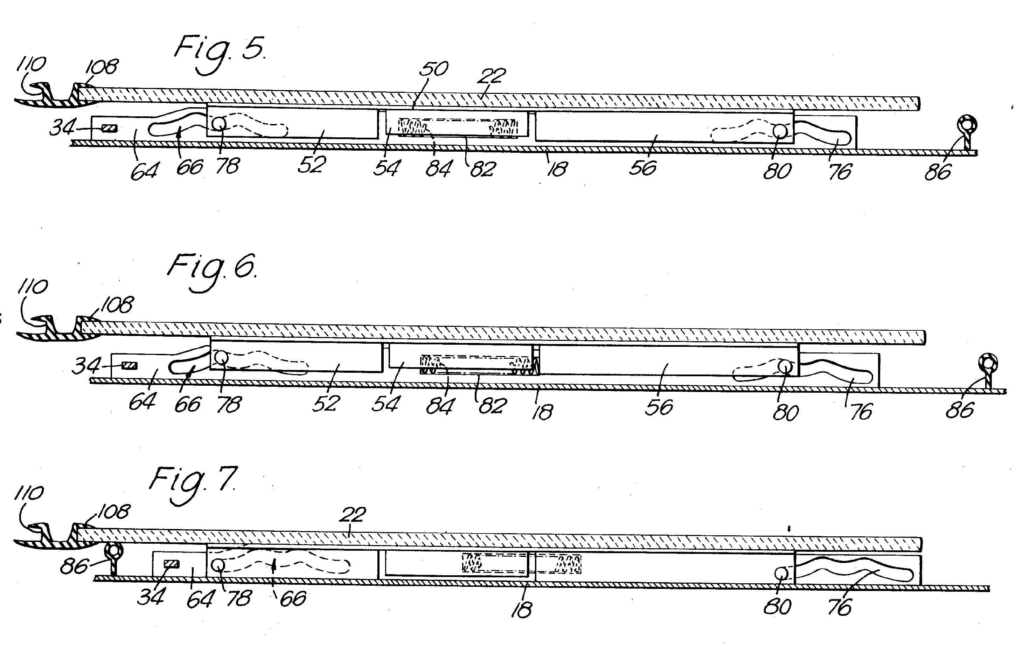

The support assemblies 24 and 26 are shown schematically in Figure 2. The support assembly 26 will now be described in more detail with reference to Figures 3 and 4. It should be understood that the support assembly 24 is a mirror image of the support assembly 26 apart from the necessary differences arising from its connection to the outer drive cable 32 rather than to the inner drive cable 38. The support assembly 26 includes an L-shaped member having one limb 50 secured to the underside of the panel and extending continuously for the full length of the support assembly 26. The other limb extends vertically downwardly and is formed in three sections 52, 54, and 56, the front and rear sections 52 and 56 being in alignment with one another and the central section 54 being located further from the adjacent edge of the panel 22, as can be seen in Figure 4. The vertical limb 52, 54, 56 projects into a groove formed in a track member 58 which is secured to the side member 18 of the frame. The side walls of the groove include slots 60 and 62, the inner ends of which are enlarged to form cylindrical channels for accommodating the drive cables 32 and 38 respectively.

The groove in the track member 58 also accommodates a slide member 64 which rests on the bottom of the groove and is coupled by the drive link 34 to the drive cable 38. The slide member 64 contains a transverse slot 66 near its front end, the slot 66 having a front end section 68 which is inclined upwardly and rearwardly, a front intermediate section 70 which is inclined downwardly and rearwardly, a rear intermediate section 72 which is inclined upwardly and rearwardly and a rear end section 74 which is inclined downwardly and rearwardly. The entire slot 66 is symmetrical about the junction between its front and rear intermediate sections 70 and 72 at which point it is higher than at the extreme end of either end section 68, 74. An identically shaped transverse slot 76 is formed near the end of the slide member 64. The flange portion 52 carries a peg 78 which engages in the front slot 66 while the flange portion 56 carries a similar peg 80 which is spaced from the front peg 78 so as to engage in the corresponding part of the rear slot 76. The slide member 64 also contains a central pocket 82. A compression spring 84 is accommodated in this pocket and extends laterally into the space provided by the offsetting of the central flange portion 54 relative to the end flange portions 52 and 56. The spring 84 can be compressed either between the rear end of the front flange portion 52 and the rear end of the pocket 84 or between the front end of the rear flange portion 56 and the front end of the pocket 82, as will be explained hereinafter.

A seal 86 extends round the edge of the opening and engages with the underside of the panel inside the track member 60.

Figure 3 illustrates the panel 22 in its fully closed position with the pegs 78 and 80 at the rear ends of their respective slots 66 and 76. In this position, the panel 22 is forced down onto the seal 86 and the compression spring 84 is compressed between the rear end of the pocket 82 and the rear end of the front flange portion 52, and is held in this position by the drive cable 38.

If the cable 38 is moved to drive the slide member 64 rearwardly, the pegs 78 and 80 move forwardly along their respective slots. As the peg 78 reaches the front of the rear end portions 74, the panel 22 is disengaged from the seal 26. Further movement towards the junction between the rear intermediate portion 72 and the front intermediate portion 70 causes the panel 22 to engage lightly against the seal 86. The compression spring 84 now engages between the ends of the pocket 82, being held clear of both the front and rear flange portions 52 and 56. Continued rearward movement of the slide member 64 causes the peg 78 to move along the front intermediate section 70 of the slot 66, at the same time compressing the spring 84 between the front end of the pocket 82 and the front end of the rear flange portion 56, as shown in Figure 4.

When the peg 78 has lifted the panel 22 sufficiently for the force exerted on the rear flange 56 by the compression spring 84 to exceed the friction between the panel 22 and the seal 86, the panel 22 moves rearwardly. When the desired movement has been completed, the compression spring 84 presses the panel 22 lightly onto the seal 86. A slight reverse movement of the drive cable 38 causes the peg 78 to move to the junction between the front and rear intermediate portion 70 and 72 of the slot 66, as shown in Figure 6, thus increasing the extent of engagement of the panel 22 with the seal 86.

If rearward movement of the slide member 64 continues until the panel 22 reaches its fully opened position, the peg 78 is driven to the extreme front of the front end section 68 of the slot 66, pressing the panel 22 firmly down on the seal 86, as illustrated in Figure 7.

When it is desired to close the panel 22, the direction of movement of the slide member 64 is reversed. It will be appreciated that, at all times, the peg 80 is in a position in the slot 76 equivalent to the position of the peg 78 in the slot 66 so that the panel 22 remains parallel to the frame 14 at all times.

Reverting to Figure 3a, the front panel has a spade member 90 secured to its front edge so as to project through a slot 92 in a vertically extending wall 94 of the front frame member 12. This arrangement permits limited angular movement of the panel 20 about its front edge. A strut 100 is pivotally attached to a mounting member 102 which is secured to the panel 20 at a location which is closer to its back edge than its front edge. The other end of the strut 100 is pivotally attached to a slide shoe 104 which runs in the track 58 and is biased forwardly by a spring 106, thus tending to displace the panel 20 to its open position as illustrated. A similar strut to the strut 100 is provided to support the other side of the roof.

An interlocking seal member 108 is mounted on the front edge of the rear panel 22. The seal member 108 has a groove 110 extending along its front edge. When it is desired to close the front panel 20, the rear panel 22 is positioned just behind its fully closed location. The front panel 20 is then pulled down by means of a handle (not shown) secured to its underside near its rear edge. The rear panel 22 is then slid forwardly so that the rear edge of the front panel 20 is engaged and held down by the channel 110 in the seal member 108. A central groove 112 in the seal member 108 discharges any rain water lodging thereon into drainage channels (not shown) outside the peripheral seal 86.

A clamp ring 120 is located below the vehicle roof 10 so as to extend round the periphery of the opening therein. It is secured to the frame 14 so as to clamp the latter firmly against the top surface of the vehicle roof 10. Channel formations 122 and 124 on the clamp ring 120 provide means for attaching the vehicle interior trim.

## Claims

1. An opening roof for a motor vehicle comprising a panel (22) mounted on guide tracks (16, 18) which are secured to the vehicle roof (10) so as to extend along opposite sides of an opening therein, the panel (22) being moveable along the guide tracks (16, 18) between a closed position in alignment with the opening and an open position in which it substantially overlaps the vehicle roof (10) adjacent to the opening, a transverse member (12) extending between the guide tracks (16, 18) at a location clear of the opening, and a pair of mutually parallel guide channels (60, 62) is formed in the transverse member (12) in the same horizontal plane for receiving first and second flexible cables (32, 38) respectively, the first cable (32) being connected to the panel (22) on one side of the opening and the second cable (38) being connected to the panel (22) on the other side of the opening, and drive means (40) on the transverse member (12) engaging with the cables (32, 38) so as to cause simultaneous movement thereof in opposite directions, characterised in that a pair of mutually parallel guide channels (60, 62) is formed in each guide track (16, 18) in alignment with the guide channels (60, 62) in the transverse member (12) so as to form two continuous guide paths for first and second flexible cables (32, 38) respectively.

2. An opening roof according to claim 1, wherein the panel (22) is supported on guide shoes which engage with the tracks (16, 18) between the two cables (32, 38).

3. An opening roof according to claim 1 or 2, wherein the drive means includes a pinion (40) located between the two drive cables (32, 38) and arranged to engage with the first cable (32) at a location spaced 180° from its point of engagement with the second cable (38).

4. An opening roof according to claim 1, 2 or 3, wherein a seal (86) at least partially surrounds the opening and engages with one of the horizontal surfaces of the panel (22) when the panel (22) is in its closed position, the panel (22) being supported on each guide track by a respective support assembly comprising a first support element (52, 54, 56) in the form of a flange secured the panel (22) so as to project downwardly and a second support element (64) forming a guide shoe adapted to slide in the track and projecting upwardly adjacent to the first support element (52, 54, 56), one of the support elements carrying a laterally extending peg (78, 80) arranged to engage in an elongate slot (66, 76) in the other support element, the slot (66, 76) having two oppositely inclined regions (70, 72) so arranged that, when the peg (78, 80) is at a central location between the inclined regions (70, 72), the panel (22) is in engagement with the seal (86) and movement of the peg (78, 80) along either of the inclined regions (70, 72) causes at least partial disengagement of the panel (22) from the seal (86).

5. An opening roof according to claim 4, wherein spring means (84) are arranged to bias the peg (78, 80) into said central location.

6. An opening roof according to claim 4 or 5, wherein each slot (66, 76) has end regions (68, 74), each of which slopes in the opposite direction to the adjacent inclined region (70, 72) so that, when the panel (22) reaches either end of its range of travel, continued movement of the guide shoes forces the panel (22) into engagement with the seal (86).

**Patentansprüche**

1. Kraftfahrzeug-Schiebedach, mit einer Platte (22), die an Führungsspuren (16, 18) gelagert ist, die an dem Fahrzeugdach (10) derart montiert sind, daß sie sich an entgegengesetzten Seiten einer Dachöffnung erstrecken, wobei die Platte (22) entlang den Führungsspuren bewegbar ist zwischen einer geschlossenen Stellung in Ausrichtung mit der Öffnung und einer geöffneten Stellung, in der sie sich im wesentlichen mit dem Fahrzeugdach neben der Öffnung überlappt, einem Querelement (12), das sich zwischen den Führungsspuren (16, 18) an einer von der Öffnung nicht belegten Stelle befindet, und einem Paar zueinander paralleler Führungskanäle (60, 62), das in derselben horizontalen Ebene in dem Querelement (12) zur Aufnahme eines ersten bzw. eines zweiten flexiblen Kabels (32) ausgebildet ist, von denen das erste Kabel (32) mit der Platte (22) an einer Seite der Öffnung und das zweite Kabel (38) mit der Platte (22) an der anderen Seite der Öffnung verbunden ist, wobei eine Antriebseinrichtung (40) an dem Querelement (12) mit den Kabeln (32, 38) in Eingriff steht, um deren gleichzeitige Bewegung in entgegengesetzte Richtungen zu veranlassen, dadurch gekennzeichnet, daß ausgerichtet mit den Führungskanälen (60, 62) in dem Querelement (12) ein Paar zueinander paralleler Führungskanäle (60, 62) in jeder Führungsspur (16, 18) ausgebildet ist, um zwei durchgehende Führungswege für das erste bzw. das zweite flexible Kabel (32, 38) zu bilden.

2. Schiebedach nach Anspruch 1, bei dem die Platte (22) auf Gleitschuhen gelagert ist, die mit den Spuren (16, 18) zwischen den beiden Kabeln (32, 38) in Eingriff stehen.

3. Schiebedach nach Anspruch 1 oder 2, bei dem die Antriebseinrichtung ein Ritzel (40) enthält, welches zwischen den beiden Antriebskabeln (32, 38) liegt und so angeordnet ist, daß es mit dem ersten Kabel (32) an einer Stelle in Eingriff steht, die um 180° von seinem Eingriffspunkt mit dem zweiten Kabel (38) beabstandet ist.

4. Schiebedach nach Anspruch 1, 2 oder 3, bei dem eine Dichtung (86) zumindest teilweise die Öffnung umgibt und in Eingriff steht mit einer der horizontalen Flächen der Platte (22), wenn sich die Platte (22) in ihrer geschlossenen Stellung befindet, wobei die Platte 22 auf jeder Führungsspur durch eine zugehörige Lagerungsanordnung gelagert ist, welche ein erstes Lagerelement (52, 54, 56) in der Form eines Flansches, der an der Platte (22) so befestigt ist, daß er nach unten absteht, und ein zweites Lagerelement (64), welches einen Führungsschuh, der in der Spur zu gleiten vermag und neben dem ersten Lagerelement (52, 54, 56) nach oben vorsteht, aufweist, wobei eines der Lagerelemente einen sich seitwärts erstreckenden Zapfen (74, 80) trägt, der in einen Längsschlitz (66, 76) in dem anderen Lagerelement eingreift, wobei der Schlitz (66, 76) mit zwei einander entgegengesetzten, geneigten Zonen (70, 72) derart ausgebildet ist, daß, wenn der Zapfen (78, 80) sich an einer mittleren Stelle zwischen den geneigten Zonen (70, 72) befindet, die Platte (22) in Eingriff mit der Dichtung (86) steht und eine Bewegung des Zapfens (78, 80) entlang einer der geneigten Zonen (70, 72) zumindest eine teilweise Versetzung der Platte (77) gegenüber der Dichtung (86) veranlaßt.

5. Schiebedach nach Anspruch 4, bei dem Federmittel (84) vorgesehen sind, um den Zapfen (78, 80) in die mittlere Stellung vorzuspannen.

6. Schiebedach nach Anspruch 4 oder 5, bei dem jeder Schlitz (66, 76) Endzonen (68, 74) besitzt, die jeweils in entgegengesetzte Richtungen zu der benachbarten geneigten Zone (70, 72) schräg verlaufen, so daß, wenn die Platte (22) das jeweilige Ende ihres Bewegungshubs erreicht, eine fortgesetzte Bewegung der Führungsschuhe die Platte (22) in Eingriff mit der Dichtung (86) drängt.

**Revendications**

1. Un toit ouvrant pour un véhicule automobile comprenant un panneau (22) monté sur des voies de guidage (16, 18), fixées au toit du véhicule (10) de manière à s'étendre le long de côtés opposés d'une ouverture ménagée à l'intérieur, le panneau (22) étant mobile le long des voies de guidage (16, 18), entre une position fermée, en alignement avec l'ouverture, et une position ouverte dans laquelle il recouvre sensiblement le toit du véhicule (10) adjacent à l'ouverture, un élément transversal (12) s'étendant entre les voies de guidage (16, 18) à un emplacement dégagé de l'ouverture, et une paire de canaux de guidage (60, 62) parallèles entre eux, est formé dans l'élément transversal (12), dans le même plan horizontal pour recevoir, respectivement, des premier et second câbles souples (32, 38), le premier câble (32) étant relié au panneau (22) sur un côté de l'ouverture et le second câble (38) étant relié au panneau (22) sur l'autre côté de l'ouverture, et des moyens d'actionnement (40) sur l'élément transversal (12), venant en engagement avec les câbles (32, 38), de manière à provoquer leur déplacement simultané dans des directions opposées, caractérisé en ce qu'une paire de canaux de guidage (60, 62), parallèles entre eux, est formée dans chaque voie de guidage (16, 18), en alignement avec les canaux de guidage (60, 62), dans l'élément transversal (12), de manière à former deux chemins de guidage continus pour, respectivement, les premier et second câbles souples (32, 38).

2. Un toit ouvrant selon la revendication 1, dans lequel le panneau (22) est supporté sur des patins de guidage qui viennent en engagement avec les voies (16, 18) entre les deux câbles (32, 38).

3. Un toit ouvrant selon la revendication 1 ou 2, dans lequel les moyens d'actionnement comprennent un pignon (40) disposé entre les deux câbles de commande (32, 38) et agencé pour venir en engagement avec sur le premier câble (32) à un emplacement espacé de 180° depuis son point d'engagement avec le second câble (38).

4. Un toit ouvrant selon la revendication 1, 2 ou 3, dans lequel un joint d'étanchéité (86) entoure au moins partiellement l'ouverture et vient en engagement avec l'une des surfaces horizontales du panneau (22) lorsque le panneau (22) est en position fermée, le panneau (22) étant supporté sur chaque voie de guidage par un ensemble de support respectif comprenant un premier élément de support (52, 54, 56) en forme de bride, fixé au panneau (22) de manière à faire saillie vers le bas, et un second élément de support (64) formant patin de guidage, agencé pour glisser dans

la voie et disposé en saillie vers le haut adjacent au premier élément de support (52, 54, 56), l'un des éléments de support portant un tenon (78, 80) s'étendant latéralement, agencé pour s'engager dans une fente allongée (66, 76) ménagée dans l'autre élément de support, la fente (66, 76) comprenant deux zones inclinées en opposition (70, 72) agencées de manière que lorsque le tenon (78, 80) est à un emplacement central, entre les zones inclinées (70, 72), le panneau (22) est en engagement avec le joint (86) et que le déplacement du tenon (78, 80) le long de l'une des zones inclinées (70, 72), provoque le dégagement au moins partiel du panneau (22) du joint (86).

5. Un toit ouvrant selon la revendication 4, dans lequel des moyens de ressort (84) sont agencés pour solliciter le tenon (78, 80) dans ledit emplacement central.

6. Un toit ouvrant selon la revendication 4 ou 5, dans lequel chaque fente (66, 76) comprend des zones d'extrémité (68, 74), chacune d'elles étant inclinée en direction opposée à la zone inclinée adjacente (70, 72) de manière que, lorsque le panneau (22) atteint l'une des extrémités de sa course, le déplacement des patins de guidage qui se poursuit pousse le panneau (22) en engagement avec le joint (86).

Fig.1.

Fig.4.

Fig.2.

*Fig. 3a.*

*Fig. 3b.*

EP 0 348 069 B1

Fig.5.

Fig.6.

Fig.7.